# EUROPÄISCHE PATENTANMELDUNG

(11) **EP 3 492 304 A1**
(43) Veröffentlichungstag der Anmeldung: **05.06.2019**
(21) Anmeldenummer: 18181077.1
(22) Anmeldetag: 02.07.2018
(51) Int. Cl.: B60L 15/02, B60L 15/20, B60L 50/50, B60W 50/08, H02P 27/08

(54) **VERFAHREN ZUM EINSTELLEN EINER LEISTUNGSELEKTRONIK**

(30) Priorität: 03.12.2017 DE 102017221738
(71) Anmelder: AUDI AG, 85045 Ingolstadt (DE)
(72) Erfinder: Apelsmeier, Andreas, 85131 Pollenfeld (DE); Brüske, Stephan, 24116 Kiel (DE)

(57) **Zusammenfassung**

Die Erfindung betrifft ein Verfahren zum Einstellen einer Modulation mindestens einer elektrischen Betriebsgröße mindestens einer Komponente einer Leistungselektronik (6), wobei eine Elektromaschine (4) eines Fahrzeugs (2) mittels der Leistungselektronik (6) betrieben wird, wobei die Modulation von einem Nutzer des Fahrzeugs (2) eingestellt wird.

## Beschreibung

Die Erfindung betrifft ein Verfahren zum Einstellen einer Leistungselektronik einer Elektromaschine und ein System zum Einstellen einer Leistungselektronik einer Elektromaschine.

Für eine Leistungselektronik einer Elektromaschine sind unterschiedliche Betriebsmodi einstellbar. Dabei ist in einem ersten Betriebsmodus zwar eine hohe Leistung erreichbar, wodurch jedoch ein von der Leistungselektronik erzeugtes Geräusch verstärkt wird. Dagegen ist in einem zweiten Betriebsmodus bei einem verminderten Geräusch nur eine geringe Leistung erreichbar. Für einen Betrieb der Leistungselektronik ist ein geeigneter Betriebsmodus auszuwählen.

Eine Vorrichtung zum Steuern einer gesteuerten Variablen durch EIN/AUS-Schaltoperationen mit weniger Rauschen ist aus der Druckschrift DE 10 2006 014 898 A1 bekannt.

Die Druckschrift DE 10 2009 049 055 A1 beschreibt ein Verfahren und ein System zum elektronischen Antreiben eines Fahrzeugs.

Eine Antriebssteuereinrichtung für ein Schienenfahrzeug ist aus der Druckschrift DE 10 2015 211 253 A1 bekannt.

Vor diesem Hintergrund war es eine Aufgabe, eine Leistung sowie eine Akustik einer Leistungselektronik bedarfsgerecht anzupassen.

Diese Aufgabe wird durch ein Verfahren und ein System mit den Merkmalen der unabhängigen Patentansprüche gelöst. Ausgestaltungen des Verfahrens und des Systems gehen aus den abhängigen Patentansprüchen sowie der Beschreibung hervor.

Das erfindungsgemäße Verfahren ist zum Einstellen einer Modulation für mindestens eine elektrische Betriebsgröße mindestens einer Komponente einer Leistungselektronik vorgesehen, wobei eine Elektromaschine eines Fahrzeugs mittels der Leistungselektronik betrieben wird. Dabei wird die Elektromaschine von der mindestens einen Komponente und somit auch von der Leistungselektronik mit der elektrischen Betriebsgröße versorgt, wobei die Modulation von einem bzw. durch einen Nutzer des Fahrzeugs selbst, bspw. manuell, eingestellt und/oder ausgewählt wird.

Hierbei wird üblicherweise ein Wert von mindestens einem Parameter, der die Modulation definiert, eingestellt und/oder ausgewählt. Dabei ist die Modulation auch durch Auswahl eines Modulationsverfahrens einstellbar und somit auswählbar. Weiterhin ist der Wert einer Frequenz, einer maximalen Leistung und/oder eines maximalen Modulationsgrads als der mindestens eine Parameter der Modulation einstellbar.

Wie nachfolgend beschrieben, ist für die mindestens eine Komponente als Teil der Leistungselektronik mindestens eine durch ein Modulationsverfahren modulierbare elektrische Betriebsgröße, bspw. eine Leistung, in Ausgestaltung der Strom und/oder die Spannung, vorgesehen, die durch den mindestens einen Parameter, bspw. durch einen zeitlichen Verlauf und/oder eine Amplitude, der Modulation, in der Regel des Modulationsverfahrens, charakterisiert ist, wobei der mindestens eine Parameter von dem Nutzer üblicherweise durch Auswahl des Werts dieses mindestens einen Parameters eingestellt wird. Für die mindestens eine Betriebsgröße wird bspw. eine als Pulsweitenmodulation ausgebildete Modulation ausgewählt und/oder eingestellt sowie für die mindestens eine Komponente durchgeführt.

Dies bedeutet bspw., dass von dem Nutzer das Modulationsverfahren zum Durchführen der Modulation aus einer Auswahl an mehreren Modulationsverfahren ausgewählt und/oder eingestellt wird. Für ein jeweils ausgewähltes Modulationsverfahren ist außerdem der Wert des mindestens einen Parameters auswähl- und/oder einstellbar.

Alternativ oder ergänzend wird von dem Nutzer der Modulationsgrad, in der Regel der maximale Modulationsgrad, bspw. der maximale Modulationsgrad der ausgewählten Modulation bzw. des ausgewählten Modulationsverfahrens zum Durchführen der Modulation eingestellt.

Das Fahrzeug, bspw. ein Kraftfahrzeug, für das das Verfahren durchführbar ist, wird mit der Elektromaschine angetrieben und ist als Elektrofahrzeug oder Hybridfahrzeug ausgebildet und/oder zu bezeichnen.

In Ausgestaltung wird von dem Nutzer der Wert der Frequenz, bspw. eine Schaltfrequenz und/oder Taktfrequenz der Modulation und/oder die Amplitude der Modulation als der mindestens eine Parameter eingestellt. Dabei ist die Taktfrequenz jene Frequenz, mit der ein Ansteuersignal bzw. ein Signal zum Ansteuern der mindestens einen Betriebsgröße und/oder der mindestens einen Komponente generiert wird. Die Schaltfrequenz ist jene Frequenz, die für die mindestens eine Betriebsgröße und/oder die mindestens eine Komponente üblicherweise real geschaltet wird.

In Ausgestaltung wird von dem Nutzer der Wert des maximalen bzw. maximal möglichen Modulationsgrads als der mindestens eine Parameter der Modulation und/oder des ausgewählten Modulationsverfahrens je nach Definition des Modulationsgrads und/oder Modulationsverfahrens auf einen Wert größer 0 und kleiner 1, auf den Wert 1 oder auf einen Wert größer 1 eingestellt.

Außerdem wird die Modulation von dem Nutzer für mindestens eine Komponente, die als Halbleiter, bspw. Leistungshalbleiter, und/oder als Wechselrichter ausgebildet ist, eingestellt.

Es ist zudem vorgesehen, dass als die mindestens eine elektrische Betriebsgröße abhängig von der jeweils ausgewählten Modulation und/oder des jeweils ausgewählten Modulationsverfahrens ein maximaler Wert der Leistung als der mindestens eine Parameter, in der Regel eine maximal mögliche und/oder einstellbare Leistung, die sich für einen Betrieb der Leistungselektronik und/oder der Elektromaschine ergibt sowie je nach Modulation und/oder Modulationsverfahren maximal erreichbar ist, eingestellt wird.

Es ist optional vorgesehen, dass von dem Nutzer bspw. eine maximale Spannung und/oder ein maximaler Strom als die mindestens eine elektrische Betriebsgröße durch Einstellen der Modulation eingestellt wird bzw. werden. Die maximale Leistung, der maximale Strom und/oder die maximale Spannung ist bzw. sind je nach Definition der mindestens eine Parameter für die Modulation, dessen Wert eingestellt, bspw. ausgewählt wird, wobei die mindestens eine Betriebsgröße der mindestens einen Komponente entsprechend moduliert wird.

In der Regel variiert die Leistung, die Spannung und/oder der Strom als die mindestens eine Betriebsgröße während eines Betriebs der Leistungselektronik und/oder der Elektromaschine bspw. in Abhängigkeit einer mechanischen Belastung der Elektromaschine, einer jeweiligen Anforderung an die Elektromaschine und/oder einer Menge an elektrischer Energie, die der Leistungselektronik und/oder der Elektromaschine aus einer Batterie zugeführt wird.

Hiervon unterscheidet sich jedoch die maximale bzw. maximal mögliche Leistung bzw. Betriebsleistung oder entsprechend die maximale bzw. maximal mögliche Spannung bzw. Betriebsspannung und/oder der maximale bzw. maximal mögliche Strom bzw. Betriebsstrom als die mindestens eine Betriebsgröße, die bzw. der durch Auswahl der Modulation, des Modulationsverfahrens und/oder des bspw. maximalen Modulationsgrads eingestellt wird. Diese mindestens eine maximale Betriebsgröße bzw. ein maximal möglicher und/oder einstellbarer Wert dieser Betriebsgröße ist durch Auswahl der Modulation festgelegt. Je nach ausgewählter Modulation ist für die mindestens eine Betriebsgröße der maximale, modulationsabhängige Wert erreichbar.

Durch Einstellen der maximalen Leistung ist von dem Fahrer auch eine Reichweite bzw. eine von dem Fahrzeug zurücklegbare Strecke einstellbar.

Durch Einstellen der Modulation wird von dem Nutzer weiterhin eine Akustik, bspw. ein Geräusch, der Leistungselektronik und/oder der Elektromaschine beeinflusst.

Das erfindungsgemäße System ist zum Einstellen und/oder Auswählen einer Modulation mindestens einer elektrischen und somit physikalischen Betriebsgröße mindestens einer Komponente einer Leistungselektronik ausgebildet. Die Leistungselektronik ist dazu ausgebildet, eine Elektromaschine eines Fahrzeugs zu betreiben. Die mindestens eine Komponente der Leistungselektronik ist bspw. dazu ausgebildet, die Elektromaschine mit der elektrischen Betriebsgröße zu versorgen. Das System weist mindestens eine Bedieneinheit bzw. ein Bedienelement auf, mit der bzw. dem die Modulation von einem Nutzer des Fahrzeugs einstellbar und/oder auswählbar ist.

Die mindestens eine Bedieneinheit weist mindestens eine Taste, einen Schalter und/oder Drehknopf, bspw. einen Regler, auf, mit der bzw. dem von dem Nutzer des Fahrzeugs die Modulation auch variabel und/oder kontinuierlich einstellbar ist. Somit ist es u. a. möglich, mit der mindestens einen Bedieneinheit ein Modulationsverfahren unter einer Auswahl mehrerer Modulationsverfahren auszuwählen sowie weiterhin für ein jeweils ausgewähltes Modulationsverfahren bspw. einen maximalen Wert des Modulationsgrads einzustellen.

Das Modulationsverfahren wird von dem Nutzer aus mehreren möglichen Modulationsverfahren ausgewählt. Bei diesen Modulationsverfahren handelt es sich bspw. u. a. um eine diskontinuierliche Modulation, in der Regel um eine diskontinuierliche Pulsweitenmodulation (DPWM), um eine Raumzeigermodulation oder eine Sinus-Dreieck-Modulation. Durch Auswahl der Raumzeigermodulation ist es möglich, die Leistungselektronik und/oder die Elektromaschine und somit das Fahrzeug in einem Komfortmodus als möglichem Betriebsmodus zu betreiben. Durch Auswahl der diskontinuierlichen Pulsweitenmodulation ist es möglich, die Leistungselektronik und/oder die Elektromaschine und somit das Fahrzeug in einem Effizienzmodus als möglichem Betriebsmodus zu betreiben. Weiterhin ist es möglich, eine als Übermodulation zu bezeichnende und/oder ausgebildete Modulation auszuwählen, mit der die Leistungselektronik und/oder die Elektromaschine und somit das Fahrzeug in einem Leistungsmodus als möglichem Betriebsmodus zu betreiben ist, wobei üblicherweise ein Modulationsgrad größer 1 eingestellt wird. Hierbei ergeben sich Einbußen im Komfort, jedoch eine gute Effizienz. Ferner ist auch ein als Akustikmodus ausgebildeter Betriebsmodus möglich, bei dem die Leistungselektronik und/oder die Elektromaschine und somit das Fahrzeug besonders leise zu betreiben ist bzw. sind.

Hierbei werden dem Nutzer in Ausgestaltung durch ein Anzeigefeld der Bedieneinheit mehrere Betriebsmodi zur Auswahl vorgeschlagen, wobei der Nutzer den für ihn geeigneten Betriebsmodus durch Bedienen der Bedieneinheit auswählt. Aufgrund einer derartigen Auswahl wird mit dem System bei einer Ausführung des Verfahrens jenes Modulationsverfahren automatisch ausgewählt, das den von dem Nutzer ausgewählten und somit gewünschten Betriebsmodus bewirkt. Ergänzend wird dem Nutzer nach der Auswahl des Betriebsmodus und somit des Modulationsverfahrens der Wert des mindestens einen Parameters für das ausgewählte Modulationsverfahren angezeigt und vorgeschlagen, wie der Wert dieses mindestens einen Parameters einstellbar bzw. einzustellen ist, um den Betriebsmodus genauer zu variieren und/oder einzustellen. Dabei ist bspw. für ein jeweils ausgewähltes Modulationsverfahren als der mindestens eine Parameter der maximale Modulationsgrad einstellbar, wodurch auch die maximale Leistung einstellbar ist.

Das System weist eine Steuereinheit bzw. ein Steuergerät auf, die bzw. das dazu ausgebildet ist, eine Durchführung mindestens einer Ausführungsform des vorgestellten Verfahrens zu kontrollieren und somit zu steuern und/oder zu regeln. Dabei ist die Steuereinheit bspw. dazu ausgebildet, eine Funktion zur Durchführung der mindestens einen Ausführungsform des vorgestellten Verfahrens zu kontrollieren und somit zu steuern und/oder zu regeln und dabei das Verfahren über die Funktion zu aktivieren sowie zu deaktivieren.

Mit dem Verfahren und dem System ist es unter anderem möglich, durch Auswählen und/oder Einstellen der Modulation eine Effizienz und/oder eine maximale Leistung des Wechselrichters als Komponente der Leistungselektronik üblicherweise durch einen Fahrer als Nutzer des Fahrzeugs bei Bedarf zu erhöhen. Hierbei ist es dem Nutzer möglich, zwischen einem Komfort, der unter anderem von der Akustik der Leistungselektronik abhängig ist, und einer Effizienz, die unter anderem von der maximalen Leistung der Leistungselektronik abhängig ist, abzuwägen und somit durch Einstellen der Modulation einen für ihn vorgesehenen individuellen Betriebsmodus aktiv auszuwählen. Somit ist es dem Nutzer u. a. möglich, die Taktfrequenz und/oder die Schaltfrequenz der Modulation selbst zu variieren.

Zum Einstellen des Komforts, üblicherweise der Akustik, ist es möglich, die als Taktfrequenz und/oder Schaltfrequenz ausgebildete Frequenz für die Modulation der mindestens einen elektrischen Betriebsgröße der mindestens einen Komponente der Leistungselektronik auf einen maximalen Wert von bspw. 10 kHz zu reduzieren, wodurch es wiederum möglich ist, ein hochfrequentes Fiepen, wie es bspw. bei einer Straßenbahn auftritt, zu vermeiden. Allerdings ist durch Einstellen einer niedrigeren Frequenz wiederum die Reichweite des Fahrzeugs zu erhöhen. Durch Einstellen der Frequenz und/oder des bspw. maximalen Modulationsgrads für die Modulation der mindestens einen Betriebsgröße wägt der Nutzer zwischen Komfort und Effizienz ab.

Eine Einstellung der Modulation wird durch den Nutzer mit der Bedieneinheit des Systems aktiv vorgenommen. Dabei ist es möglich, dass die Bedieneinheit auch für andere Zwecke verwendet wird. Die Bedieneinheit umfasst bspw. mindestens eine Taste, die in Ausgestaltung drehbar und/oder verschiebbar und somit als Regler ausgebildet ist. Mit dem Anzeigefeld der Bedieneinheit sind weiterhin unterschiedliche Menüpunkte darstellbar, die von dem Nutzer zum Einstellen und/oder Auswählen der Modulation, bspw. des Modulationsverfahrens, des bspw. maximalen Modulationsgrads, der maximalen Leistung und/oder der Frequenz, bedienbar sind. Hierbei ist es möglich, dass die Bedieneinheit bspw. als Smartphone oder Mobiltelefon ausgebildet ist. Die Bedieneinheit ist bspw. in dem Fahrzeug fest installiert oder als vom Fahrzeug unabhängig verwendbar ausgebildet. Dabei ist es möglich, dass die Bedieneinheit bspw. über elektromagnetische Wellen mit dem Fahrzeug und somit bspw. auch mit der Steuereinheit des Systems Signale austauscht.

Es ist ebenfalls möglich, eine derartige tragbare Bedieneinheit zumindest zeitweise und auch wieder lösbar über eine physische Schnittstelle mit dem Fahrzeug und somit mit der Steuereinheit des Systems zu verbinden. Es ist ebenfalls möglich, die Funktion bzw. ein entsprechendes Feature zur Durchführung des Verfahrens als Software für einen begrenzten Zeitraum einer begrenzten Anzahl an Tagen, bspw. nur über ein Wochenende, als Feature-on-demand zu kaufen und/oder zu buchen. In Ausgestaltung weist die Bedieneinheit eine als Schieberegler ausgebildete Taste und/oder einen als Schieberegler ausgebildeten Menüpunkt auf, mit dem es möglich ist, einen Wert der Frequenz, der maximalen Leistung und/oder des bspw. maximalen Modulationsgrads der Modulation variabel sowie stufenlos einzustellen.

Somit ist es dem Nutzer möglich, ein Optimum zwischen Komfort, der von der Akustik abhängig ist, und der Reichweite und/oder maximalen Leistung einzustellen bzw. zu finden. Dabei ist es ebenfalls möglich, eine maximale Frequenz und/oder den maximalen Modulationsgrad als Parameter der Modulation aktiv auszuwählen. So ist es bspw. möglich, den maximalen Modulationsgrad der Modulation auf einen Wert <1 einzustellen, durch den sich in einem Innenraum des Fahrzeugs nahezu keine akustischen Beeinträchtigungen ergeben. Zum Erhöhen der maximal möglichen Leistung ist dagegen bspw. der maximale Modulationsgrad und/oder die Frequenz als Parameter der Modulation zu erhöhen. Dabei wählt der Nutzer aus, inwiefern er zum Erhöhen der Leistung akustische Nachteile in Kauf nimmt. Durch die Möglichkeit, die Modulation der mindestens einen elektrischen Betriebsgröße der Leistungselektronik einzustellen, wird unter anderem eine Elektrifizierung des Fahrzeugs für den Nutzer erlebbar gemacht.

Der Nutzer nimmt durch Bedienen der Bedieneinheit unter anderem auf die Taktfrequenz und/oder die Schaltfrequenz von Halbleitern der Leistungselektronik direkten Einfluss. Somit hat er hinsichtlich der Akustik und einem Verbrauch an elektrischer Energie im Fahrzeug und somit für die Reichweite des Fahrzeugs die Möglichkeit einer individuellen Auswahl. Es ist ebenfalls möglich, den maximalen Modulationsgrad als den mindestens einen Parameter der Modulation, bspw. des Modulationsverfahrens, der elektrischen Betriebsgröße individuell zu variieren und somit ebenfalls zwischen Akustik und maximaler Leistung abzuwägen.

Die Leistungselektronik ist dazu ausgebildet, den elektrischen Antrieb des Fahrzeugs, bspw. eine dreiphasige Elektromaschine, anzusteuern. Dabei weist die Leistungselektronik den Wechselrichter mit einer konstanten Taktfrequenz von bspw. 10 kHz über einen gesamten Betriebsbereich auf, wobei der Wert der Taktfrequenz von dem Nutzer einstellbar und somit auswählbar ist. Dabei ist es auch möglich, die Taktfrequenz des Wechselrichters drehzahlabhängig zu variieren und bspw. bei einem Anfahren des Fahrzeugs zur Reduktion von Verlusten auf 5 kHz zu reduzieren. Allerdings ergibt sich bei einer derartigen Reduktion der Taktfrequenz eine höhere Stromwelligkeit und eine Verschlechterung einer Akustik, die sich bspw. durch ein hochfrequentes Fiepen bemerkbar macht.

Die Leistungselektronik weist weiterhin mindestens einen Leistungshalbleiter als Komponente auf, für den eine Schaltfrequenz vorgesehen ist, deren Wert mit dem Verfahren eingestellt und/oder ausgewählt wird, wobei sich eine Parität zwischen Schalt- und Durchlassverlusten ergibt. Weiterhin ist es im Rahmen des Verfahrens auch möglich, die Modulation durch Auswahl eines kontinuierlichen Modulationsverfahrens oder eines diskontinuierlichen Modulationsverfahrens einzustellen und somit für die mindestens eine Betriebsgröße eine kontinuierliche oder eine diskontinuierliche Modulation umzusetzen.

Die Schaltfrequenz und die Taktfrequenz sind bei einem kontinuierlichen Modulationsverfahren zu einem Schaltverlust direkt proportional. Falls die Schaltfrequenz bspw. halbiert wird, ist es möglich, einen Gesamtverlust von Leistungshalbleitern eines Wechselrichters um 25 % zu reduzieren. Bei einem Wirkungsgrad der Leistungselektronik und der Elektromaschine von 96 % sowie bei einer Leistung der Elektromaschine zum Antreiben des Fahrzeugs von 100 kW ergibt sich bei einer Halbierung von Schaltverlusten eine Reduktion der Verluste von 4 kW auf 3 kW.

Weiterhin ist es möglich, einen Schaltverlust durch Auswahl eines diskontinuierlichen Modulationsverfahrens zu reduzieren, wobei eine Schaltfrequenz von Leistungshalbleitern im Vergleich zu einer Taktfrequenz um ein Drittel reduziert wird. Allerdings nimmt auch bei einem derartigen diskontinuierlichen Modulationsverfahren eine Stromwelligkeit zu, wodurch die Akustik verschlechtert wird. Hinsichtlich einer elektromagnetischen Verträglichkeit ist es möglich, für Leistungshalbleiter und/oder einen Wechselrichter einer Leistungselektronik eine sogenannte zufällige Pulsweitenmodulation (Random-PWM) einzustellen, bspw. auszuwählen, bei der eine Taktfrequenz bspw. um einen Wert von +/-1 % zufällig variiert wird. Hierdurch wird ein Störpegel der elektromagnetischen Verträglichkeit (EMV) breiter gestreut.

Die Leistungselektronik, die den Wechselrichter als Komponente aufweist, ist weiterhin für einen Traktionsantrieb einsetzbar, wobei bei einer kontinuierlichen Modulation ein maximaler Modulationsgrad mit dem Wert 1 eingestellt wird. Es ist jedoch auch möglich, einen maximalen Modulationsgrad mit einem Wert >1 zu verwenden. Hierdurch ist eine höhere maximale Leistung des Antriebs, der die Elektromaschine und die Leistungselektronik umfasst, bei gleicher eingesetzter Hardware erzielbar. Allerdings wird bei einem maximalen Modulationsgrad >1 die Akustik erheblich schlechter. Der Modulationsgrad beschreibt bspw. ein Verhältnis der eingehenden elektrischen Betriebsgröße, bspw. einer Leiter-Leiter-Spannung, die der Leistungselektronik bereitgestellt wird, und einer sich aufgrund der jeweils eingestellten und/oder ausgewählten Modulation ergebenden ausgehenden Betriebsgröße, bspw. eine Gleichspannung bzw. DC-Spannung, die der Elektromaschine von der Leistungselektronik bereitgestellt wird, wobei die Elektromaschine von der Leistungselektronik mit der Betriebsgröße versorgt und mittels der Leistungselektronik betrieben wird.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

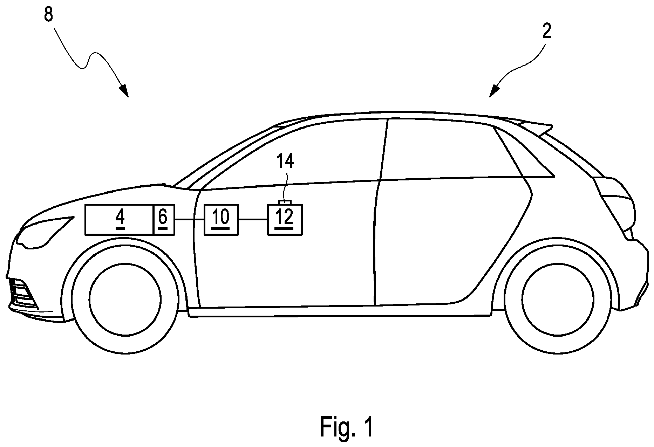

Figur 1 umfasst eine schematische Darstellung einer Ausführungsform des erfindungsgemäßen Systems bei Durchführung einer Ausführungsform des erfindungsgemäßen Verfahrens.

Figur 1 zeigt in schematischer Darstellung ein Fahrzeug 2, das eine Elektromaschine 4 aufweist, mit der das Fahrzeug 2 anzutreiben ist. Dabei ist der Elektromaschine 4 eine Leistungselektronik 6 zum Betreiben der Elektromaschine 4, bspw. zum Steuern eines Betriebs der Elektromaschine 4, zugeordnet. Die Ausführungsform des erfindungsgemäßen Systems 8 umfasst als Komponenten eine Steuereinheit 10, die hier ebenfalls in dem Fahrzeug 2 angeordnet ist, sowie mindestens eine Bedieneinheit 12, die mindestens eine als Regler ausgebildete Taste 14 aufweist. Dabei ist die mindestens eine Bedieneinheit 12 hier über die Steuereinheit 10 mit der Leistungselektronik 6 verbunden. Die mindestens eine Bedieneinheit 12 ist je nach Ausgestaltung des Systems 8 in dem Fahrzeug, üblicherweise in einem Innenraum des Fahrzeugs 2, installiert oder auch unabhängig von dem Fahrzeug 2 nutzbar bzw. bedienbar, wobei die Verbindung zwischen der mindestens einen Bedieneinheit 12, der Leistungselektronik 6 und/oder der Steuereinheit 10 über eine Schnittstelle oder drahtlos unter Austausch elektromagnetischer Wellen bereitstellbar ist.

Mindestens eine elektrische Betriebsgröße, die einen Betrieb der Elektromaschine 4 und/oder der Leistungselektronik 6 beeinflusst, ist bzw. sind eine Spannung und/oder ein Strom, die bzw. der sich zeitlich, bspw. periodisch, verändert bzw. verändern. Weiterhin ist für mindestens eine Betriebsgröße eine Modulation vorgesehen, die bei der Durchführung der Ausführungsform des Verfahrens von einem Nutzer, bspw. einem Fahrer, des Fahrzeugs 2 durch Bedienen des mindestens einen Bedienelements 12 individuell einstellbar ist. Dies umfasst auch eine Auswahl eines Modulationsverfahrens zum Durchführen der Modulation sowie ein Einstellen eines Werts mindestens eines Parameters, der die Modulation definiert. Der mindestens eine Parameter ist bspw. ein Modulationsgrad, eine maximal mögliche Leistung, eine Frequenz, d. h. eine Schaltfrequenz und/oder Taktfrequenz, eines Stroms oder einer Spannung als Beispiele für die elektrische Betriebsgröße mindestens einer Komponente der Leistungselektronik 6, bspw. mindestens eines Halbleiters und/oder eines Wechselrichters der Leistungselektronik 6. Dabei ist durch den Nutzer bspw. durch Beaufschlagen, bspw. Verschieben und/oder Drehen, der Taste 14 des Bedienelements 12 der Wert des Parameters für die Modulation der mindestens einen Betriebsgröße variabel einstellbar und/oder auswählbar, wodurch die maximale Leistung sowie eine Akustik der Leistungselektronik 6 und/oder der Elektromaschine 4 angepasst werden. Die mindestens eine modulierte Betriebsgröße wird der Elektromaschine 4 von der Leistungselektronik 6 bereitgestellt und die Elektromaschine 4 somit mittels der bzw. durch die Leistungselektronik 6 betrieben.

## Patentansprüche

1. Verfahren zum Einstellen einer Modulation mindestens einer elektrischen Betriebsgröße mindestens einer Komponente einer Leistungselektronik (6), wobei eine Elektromaschine (4) eines Fahrzeugs (2) mittels der Leistungselektronik (6) betrieben wird, wobei die Modulation von einem Nutzer des Fahrzeugs (2) eingestellt wird.

2. Verfahren nach Anspruch 1, bei dem von dem Nutzer ein Modulationsverfahren zum Durchführen der Modulation eingestellt wird.

3. Verfahren nach Anspruch 1 oder 2, bei dem von dem Nutzer ein Modulationsgrad zum Durchführen der Modulation eingestellt wird.

4. Verfahren nach einem der voranstehenden Ansprüche, bei dem von dem Nutzer eine Frequenz der Modulation eingestellt wird.

5. Verfahren nach einem der voranstehenden Ansprüche, bei dem die Modulation von dem Nutzer für mindestens eine Komponente, die als Halbleiter ausgebildet ist, eingestellt wird.

6. Verfahren nach einem der voranstehenden Ansprüche, bei dem die Modulation von dem Nutzer für mindestens eine Komponente, die als Wechselrichter ausgebildet ist, eingestellt wird.

7. Verfahren nach einem der voranstehenden Ansprüche, bei dem von dem Nutzer eine maximale Leistung eingestellt wird.

8. System zum Einstellen einer Modulation mindestens einer elektrischen Betriebsgröße mindestens einer Komponente einer Leistungselektronik (6), wobei die Leistungselektronik (6) dazu ausgebildet ist, eine Elektromaschine (4) eines Fahrzeugs (2) zu versorgen, wobei das System (8) eine Bedieneinheit (12) aufweist, mit dem die Modulation von einem Nutzer des Fahrzeugs (2) einstellbar ist.

9. System nach Anspruch 8, bei dem die Bedieneinheit (12) mindestens eine Taste (14) aufweist, mit der von dem Nutzer des Fahrzeugs (2) die Modulation einstellbar ist.

10. System nach Anspruch 8 oder 9, das eine Steuereinheit (10) aufweist, die dazu ausgebildet ist, eine Durchführung eines Verfahrens nach einem der Ansprüche 1 bis 7 zu kontrollieren.
